# EUROPEAN PATENT APPLICATION

(11) **EP 2 336 514 A2**
(43) Date of publication of application: **22.06.2011**
(21) Application number: 10193658.1
(22) Date of filing: 03.12.2010
(51) Int. Cl.: F01N 3/20

(54) **Liquid reductant dosing module with heating device**

(30) Priority: 15.12.2009 US 638364
(71) Applicant: Delphi Technologies, Inc., Troy, MI 48007 (US)
(72) Inventor: Li, Bob Xiaobin, Grand Blanc, MI 48439 (US); Ricci-Ottati, Giulio Angel, Burton, MI 48509 (US)
(74) Representative: Denton, Michael John

(57) **Abstract**

A liquid reductant dosing module for a combustion exhaust system (5) is disclosed comprising an enclosed reservoir comprising a top, a bottom, one or more sides, an inlet (25), and an outlet (27). A resistive wire rod heater is disposed in that reservoir, comprising a hollow member extending along a first axis between the bottom of the reservoir and the top of the reservoir. Along that member there is disposed resistive metal wire (39) such that when electric current is applied to the resistive metal wire (39), a greater portion of electric power is distributed as heat proximate to the bottom of the reservoir than is distributed as heat proximate to the top of the reservoir.

## Description

### TECHNICAL FILED

This invention relates to a reservoir for a fluid dosing system. More specifically, the invention relates to a reservoir for holding a reducing agent for introduction into a combustion exhaust gas.

### BACKGROUND OF THE INVENTION

The emission of nitrogen oxide (NOₓ) compounds in engine exhausts has long been the focus for health professionals and regulatory agencies worldwide. In many locations, regulations require stringent reductions of NOₓ levels in new equipments. NOₓ emissions may be found in a variety of systems such as internal combustion engines, gas turbine exhaust, lean bum engines, industrial boilers, process heaters or other process streams.

In order to reduce NOₓ emissions, it is known to use a selective catalytic reduction (SCR) device to treat an exhaust flow and to significantly reduce NOₓ emissions. In an SCR system a reducing agent, for example urea solution, is dosed into the exhaust gas flow upstream of an SCR catalyst. This reducing agent is then usually reacted in the presence of a catalyst downstream of the injection point in an SCR device. Within the SCR device NOₓ compounds are then reduced to nitrogen. WO2004111401 discloses such a device.

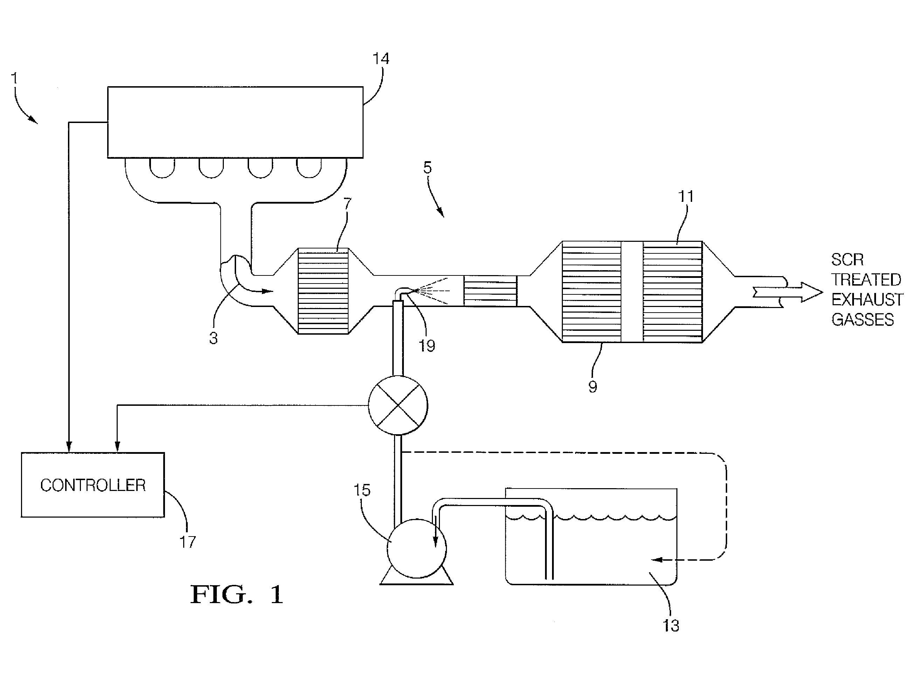

The general operation of an SCR device is shown in FIG. 1, in which a diesel engine 1 produces an exhaust flow comprising various exhaust gases 3. The exhaust gases are conveyed through an exhaust system, indicated generally at 5, comprising an oxidation catalyst device 7, a selective reduction catalyst device 9 and a slip catalyst 11.

The oxidation catalyst device 7 is a flow through device that consists of a canister containing a honeycomb-like structure or substrate. The substrate has a large surface area that is coated with an active catalyst layer. This layer contains a small, well dispersed amount of precious metals such as platinum or palladium. As the exhaust gases traverse the catalyst, carbon monoxide, gaseous hydrocarbons and liquid hydrocarbon particles (unburned fuel and oil) are oxidized, thereby reducing harmful emissions.

The SCR device 9 performs SCR treatment of NOₓ using ammonia derived from a source of urea as a chemical reductant. A slip catalyst 11 may be located downstream of the SCR device 9 to clean up any unreacted ammonia.

Urea for the SCR device 9 is stored in a tank 13 which is in fluid communication with the exhaust system 5. A pump 15 is provided to pump urea from the tank 13 to the exhaust system 5. The supply of urea is controlled by a control unit 17, for example the engine control unit, which receives engine speed and other engine parameters from the engine 1. An injection device 19 (also referred to herein as a fluid dosing device) is used to inject the urea into the exhaust flow.

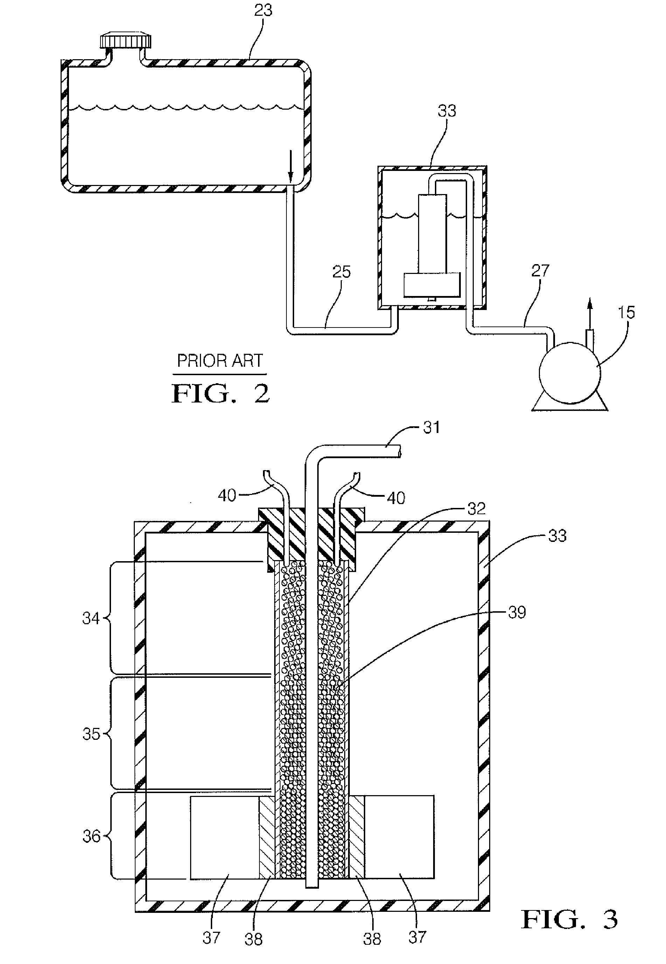

As a 32.5% urea solution freezes at -11.5°C, urea delivery systems must be adapted for delivery of liquid urea to the vehicle exhaust system under conditions that would normally cause the liquid urea to freeze. One solution would be to simply heat the storage tank 13. However, this can require substantial quantities of energy to maintain the entire storage tank 13 in a liquid state and can take significant time to thaw if the tank has become completely frozen. An alternative arrangement is to place a smaller reservoir downstream of the storage tank that can be unfrozen quickly and/or maintained as liquid more efficiently since it contains a smaller amount of liquid urea. Such an arrangement is shown in FIG. 2, with urea flowing from storage tank 23 into dosing reservoir 33 through inlet 25, and then pumped out of dosing reservoir 33 by pump 15 through outlet 27 from where it flows to the exhaust stream as shown in FIG. 1. Alternatively, the dosing reservoir can be positioned adjacent to and in physical contact with the storage tank or even inside the storage tank so that heat from the heated dosing reservoir during prolonged periods of operation will help thaw the storage tank or maintain it in a liquid state.

In any case, a liquid reductant reservoir (whether it is storage tank 13 or smaller dosing reservoir 33) will need to be heated in order to provide liquid reductant to the exhaust system. One proposed approach has been to use a submerged ceramic PTC heater in the reservoir. However, this approach provides heat at the bottom of the reservoir, but not at the top. As liquid reductant is dosed into the exhaust system, the level in the reservoir drops, resulting in a cavity of dead air space forming between the frozen reductant toward the top of the reservoir and a level of liquid underneath, which can result in poor heat transfer to the remaining frozen urea. Further, as the liquid urea level continues to drop, the ceramic PTC heater element may itself become exposed to air, at which point its self-regulating heating function will result in restricted power to the heater for further melting of frozen urea.

An alternative heater approach is to use a vertical ceramic PTC rod heater that runs from the top to the bottom of the urea reservoir. This approach can provide good heating near the top of the reservoir, but may not heat the bottom quickly enough to provide liquid urea for exhaust treatment right after vehicle startup. Also, as the urea level drops during dosing, exposure of the top of the ceramic PTC rod heater to the air can result in power reduction due to the heater's self-regulating function.

Therefore, there is a need in the art for providing heat to a reservoir for use in a dosing system that addresses the above mentioned problems.

### SUMMARY OF THE INVENTION

The invention is related to a liquid reductant dosing module for a combustion exhaust treatment system comprising an enclosed reservoir comprising a top, a bottom, one or more sides, an inlet and an outlet, and a resistive wire rod heater disposed in said reservoir. The resistive wire comprises a hollow member extending along a first axis between the bottom and the top of said reservoir. The resistive metal wire is disposed along said member such that when electric current is applied to said resistive metal wire, a greater portion of electric power is distributed as heat proximate to the bottom of said reservoir than is distributed as heat proximate to the top of said reservoir. The liquid reductant dosing module may have a greater density of resistive metal wire disposed along said member proximate to the bottom of said reservoir than is disposed along said member proximate to the top of said reservoir. The resistive metal wire may be disposed along said member proximate to the bottom of said reservoir has a greater resistivity than resistive metal wire disposed along said member proximate to the top of said reservoir. The metal wire may be disposed along said member such that when current is applied to said resistive metal wire, 0 to 10 percent of the heat generated by such current is distributed along a zone of said member proximate to the top of said reservoir, 60 to 80 percent of the heat generated by such current is distributed along a zone of said member proximate to the bottom of said reservoir, and 20 to 30 percent of the heat generated by such current is distributed along a zone of said member between the zone proximate to the top and the zone proximate to the bottom of said reservoir. The resistive metal wire may alternatively be disposed along said hollow member such that when current is applied to said resistive metal wire, 0 to 1 watts/in² is distributed along a zone of said hollow member proximate to the top of said reservoir, 8 to 10 watts/in² is distributed along a zone of said hollow member proximate to the bottom of said reservoir, and 2.5 to 3.5 watts/in² is distributed along a zone of said member between the zone proximate to the top and the zone proximate to the bottom of said reservoir. Also, the intlet is located proximate to the bottom of said reservoir and the outlet comprises a pickup tube extending along a second axis, which may be the same as or different than said first axis, extending between the bottom of said reservoir and the top of said reservoir, said pickup tube having an open end proximate to the bottom of said reservoir. Said pickup tube is disposed inside said hollow member which may be of stainless steel. The resistivity of the resistive metal wire along a zone of said member proximate to the top of said reservoir is 0 ohm-m to 0.25 ohm-m, the resistivity of the resistive metal wire along a zone of said member proximate to the bottom of said reservoir is 1.5 ohm-m to 2.5 ohm-m, and the resistivity of the resistive metal wire along a zone of said member between the zone proximate to the top and the zone proximate to the bottom of said reservoir is 0.25 ohm-m to 0.5 ohm-m. The wire material has a resistivity of 1 ohm-m to 1.5 ohm-m. The wire material has a positive temperature resistivity coefficient ranging from 0.1 ohm-m/°C to 0.15 ohm-m/°C. The liquid reductant dosing module further comprises a Wheatstone bridge control circuit to control the current applied to said resistive wire and a heat sink member, in thermal contact with said heater in said zone proximate to the bottom of said reservoir such that when current is applied to said resistive metal wire 0.5 to 1.5 watts/in² is distributed through the combined surface area of said heat sink member, and said hollow member along the zone of said hollow member proximate to the bottom of said reservoir. The module may further comprise a deflector to inhibit convectional movement of liquid reductant from proximate the bottom of said reservoir toward the top of said reservoir. The invention is also related to a liquid reductant dosing module for a combustion exhaust treatment system comprising an enclosed reservoir comprising a top, a bottom, one or more sides an inlet and an outlet, a rod heater disposed in said reservoir extending along a first axis between the bottom of said reservoir and the top of said reservoir; and a heat deflector member disposed circumferentially around said rod header proximate to the bottom of said rod heater, configured to inhibit upward convective heat transfer in said liquid reductant. The inlet is located proximate to the bottom of said reservoir and the outlet comprises a pickup tube extending along a second axis, which may be the same as or different than said first axis, extending between the bottom and the top of said reservoir, said pickup tube having an open end proximate to the bottom of said reservoir. The pickup tube is disposed inside said hollow member.The heat deflector member comprises a top member having an opening therein disposed circumferentially around said hollow member and at least one side member attached to and extending downward from said top member such that there is a space between said hollow member and said at least one side member. The liquid reductant dosing module further comprises a bottom member having an opening therein disposed circumferentially around said hollow member and attached to said at least one side member and at least one of said top member, said at least one side member, and said bottom member has at least one opening therein through which liquid reductant can pass and at least one opening through which liquid reductant can pass has a filter medium disposed therein.

The above-described dosing module provides greater heat at the bottom of the reservoir for rapid melting of liquid reductant to be dosed to an exhaust system while still providing some power (or at least conductance of heat) to the top of the reservoir to melt any residual frozen reductant. These and other advantages and features will become more apparent from the following description taken in conjunction with the drawings.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:

FIG. 1 depicts a known SCR system.

FIG. 2 depicts a known reservoir configuration for dosing liquid reductant as part of an SCR system.

FIG. 3 shows an exemplary liquid reductant dosing module according to the invention with a heat conductor attached at one end of the heater.

FIGS. 4A and 4B show an exemplary heater and pickup tube assembly for a liquid reductant dosing module according to the invention with a heat deflector assembly.

### DESCRIPTION OF THE PREFERRED EMBODIMENTS

Referring now to the Figures, the invention will be described with reference to specific embodiments, without limiting same. Turning now to FIG. 3, there is shown dosing reservoir 33 having a heater therein according to an exemplary embodiment of the invention. The heater is shown in cut-away fashion in FIG. 3 with hollow tube 32 having windings of resistive metal wire 39 thereon. The resistive metal wire may be on either the inner surface or the outer surface of tube 32. In one exemplary embodiment, it is on the inner surface, which may provide protection against damage to the wire. The tube 32 may be of any material that is compatible with the reductant composition in the reservoir and the temperature of the wire windings 39 when heated, although in one exemplary embodiment it is a heat-conductive metal such as stainless steel. The resistive metal wire 39 may be of any metal having a resistance in the range that renders it useful for a heating element in this application, which in an exemplary embodiment is in the range of 1 ohm to 1.5 ohm. The total length of the resistive metal wire 39 depends on the configuration of the reservoir and environmental conditions. In one exemplary embodiment, the total wire length ranges from 1 to 1.5 meters.

The dosing reservoir also includes a liquid reductant pickup tube 31 for drawing liquid reductant from near the bottom of reservoir 33 and discharging out the top to the vehicle exhaust. Pickup tube 31 may be of a suitable material, and may be of the same material as hollow tube 32, e.g., stainless steel. The pickup tube is shown in FIG. 3 as being inside the hollow tube 32, which can help to ensure that it is quickly thawed by the heat from the resistive metal wire 39, but the pickup tube 31 can also be positioned adjacent to the tube 32 or anywhere else in the reservoir 33.

The resistive metal wire 39 is configured so that when electric current is applied to it, a greater portion of electric power is distributed as heat proximate to the bottom of the reservoir than is distributed as heat proximate to the top of the reservoir. One way this can be accomplished is by placing a greater density of metal wire toward the bottom of the tube 32 than toward the top of tube 32 and applying a voltage differential between an electrical leads 40 at opposite ends of the wire, shown in FIG. 3 to both be at the top end of the tube 32. In an exemplary embodiment of the invention, the distribution of electric power is broken down into multiple zones, and FIG. 3 depicts three such zones: a low power density zone 34 proximate to the top of tube 32 where the spacing of the courses as the wire winds along the tube 32 are relatively far apart, a high power density zone 36 proximate to the bottom of tube 32 where the spacing of the courses as the wire winds along the tube 32 are relatively close together, and a medium power density zone 35 in between zones 34 and 36 where the spacing of the courses as the wire winds along the tube 32 is between the spacing for zone 34 and the spacing for zone 36. The proportion of the length of tube 32 taken up by each of the zones 34, 35, and 36 may vary depending on design parameters. In one exemplary embodiment, each of zones 34, 35, and 36 covers approximately one third of the total length of tube 32. The distribution of power along the tube 32 can vary depending on the configuration of the reservoir, position of the heater, etc., but the power in zone 36 should be sufficiently high to rapidly melt frozen reductant upon a cold vehicle start while the power in zone 34 should be sufficiently low to avoid overheating when the level of liquid reductant in the reservoir drops before the storage tank melts sufficiently to refill it. In one exemplary embodiment it is 0 - 1 watts/in² of the tube surface area along the upper zone of tube 32, 2.5 - 3.5 watts/in² along the middle zone of tube 32, and 8 - 10 watts/in² along the bottom zone of tube 32. In an embodiment where there is zero power distribution along the upper zone of tube 32, the upper electric lead attaches at the interface of zones 34 and 34 instead of at the top of zone 34, and the wire in zone 34 acts only as a conductor of heat generated in the powered portions of the wire.

In an alternate exemplary embodiment of the invention, the power distribution profile along the tube 32 is achieved through the use of materials of different resistivities that have been electrically connected to one another. For example, in the three-zone embodiment shown in FIG. 3, the wire in zone 36 would have a higher resistivity than the wire in zone 35, which would have a higher resistivity than the wire in zone 34. In this embodiment, zone 34 could still be given zero power by positioning the upper lead at the interface of zones 34 and 34 and having the wire in zone 34 functioning only as a heat conductor, in which case its electrical resistivity is not relevant since it is not part of the electric circuit. In an exemplary implementation of this embodiment, the wire in zone 35 has a resistivity of 0.25 ohm-m to 0.5 ohm-m and the wire in zone 36 has a resistivity of 1.5 ohm-m to 2.5 ohm-m and the wire in zone 34 has a resistivity of 0 ohm-m to 0.25 ohm-m. Resistivity may be varied by choosing different materials having different resistivity's and/or varying the wire diameter.

In yet another alternate exemplary embodiment, the power distribution profile along the tube 32 can be achieved through the use of separate control circuits for different zones along the tube 32. In this embodiment, each zone may have its own set of electric leads connected to an independent controller and/or control circuit so that the power to each zone is directly and independently regulated by a controller and/or a control circuit to provide a greater distribution of power proximate the bottom of tube 32 than proximate the top of tube 32.

The various alternate embodiments for achieving a power distribution profile may be used independently or in combination. For example, sections of wire may have different winding densities and be made of different material, or zones of wire connected to independent control circuits may be made of materials having different resistivity's, or all three embodiments may be used in combination.

In yet another exemplary embodiment of the invention, the resistive metal wire 39 has a positive temperature coefficient of resistivity (TCR) that enables self-regulation of the temperature of the wire for a given voltage applied to it. Wire with a positive TCR will exhibit greater levels of resistivity at greater temperatures and lower levels of resistivity at lower temperatures. In this case, as temperature of the wire starts to rise, either because liquid reductant level in the reservoir has dropped causing a portion of the wire to be exposed to air or because the liquid reductant itself has been heated, the resistivity starts to rise so that for a given voltage, current flow through the wire is regulated and less heat will be generated. In an exemplary embodiment, the resistive metal wire 39 has a TCR ranging from 0.1 ohm-m/°C to 0.15 ohm-m/°C. In an alternate embodiment, or in conjunction with the use of positive TCR wire, this type of self-regulation can be achieved and/or enhanced by controlling the current supplied to the resistive metal wire with a Wheatstone bridge control circuit to control current to the heater based on the resistance that it sees applied across the bridge. For example, when used with resistive metal wire that may have a positive TCR, but where the TCR is not large enough to provide self-regulation on its own, a Wheatstone bridge, which will see increasing resistivity of the resistive metal wire 39 as temperature of the wire increases, will reduce the current provided to the resistive metal wire 39, thereby enhancing the temperature regulation of the wire.

With continuing reference to FIG. 3, there is shown an exemplary embodiment where there is an annular-shaped heat conductor 38 surrounding tube 32, having heat-conducting fins 37 extending radially therefrom. The heat conductor 38 and heat-conducting fins 37 can be made from any heat-conducting material such as aluminum or stainless steel. In an exemplary non-limiting embodiment, the heat conductor 38 and heat-conducting fins 37 are effective to reduce the effective power density in zone 36 to 0.5 to 1.5 watts/in². Materials such as aluminum, which are susceptible to reaction with reductants like urea, may be have a thin layer to provide protection from the reductant, such as a polytetrafluoroethylene coating or a layer of anodized aluminum.

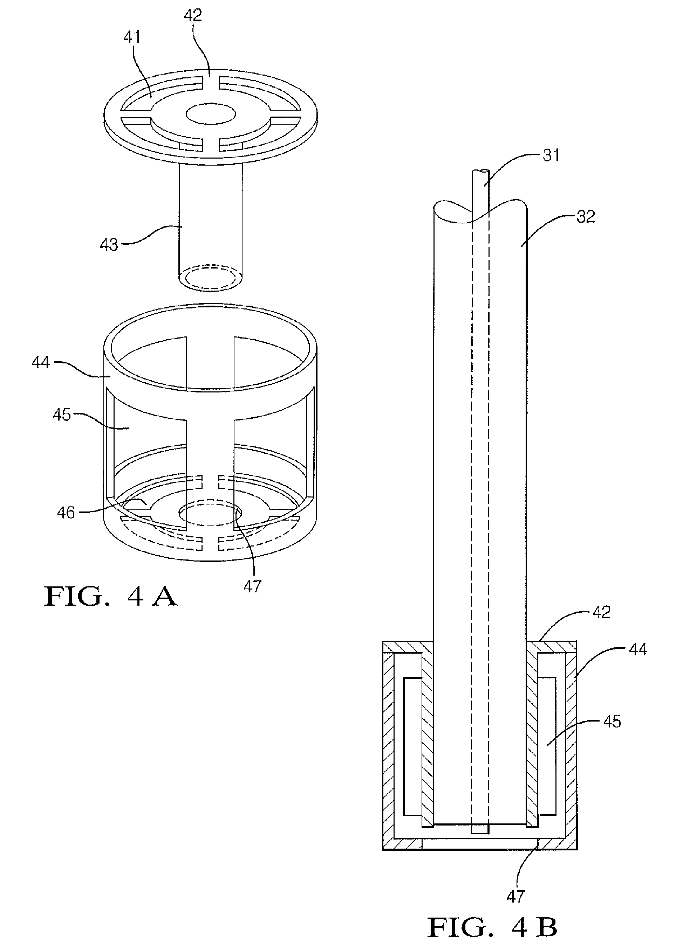

The heated liquid reductant dosing reservoir according to the invention provides more heat toward the bottom of the reservoir where it is needed, and that heat can also be advantageously carried to other portions of the reservoir by convection. In some situations, however, because the pickup tube 31 extends below the bottom of tube 32, it may be desirable to provide more heat below the bottom of the tube 32 to thaw or maintain liquid at the inlet of the pickup tube 31. One way to provide such heat distribution is with a deflector. The deflector serves to deflect toward the reservoir bottom some of the convective heat transfer that would normally go from the bottom of the reservoir to the top of the reservoir, thus forcing more heat at the bottom near the inlet of pickup tube 31. In one exemplary embodiment, the deflector may be a simple cup-shaped member with a hole in the bottom of the cup in which the tube 32 would be disposed with the cup-shaped member inversely mounted near the bottom of tube 32. An alternative exemplary deflector design is shown in FIGS. 4A and 4B. The deflector assembly is shown in an exploded view in FIG. 4A, with bottom piece 44 having side openings 45, bottom openings 46, and central opening 47, and a top piece having collar portion 43 adapted to fit around tube 32 and flange portion 42 having openings 41. Openings 41, 45, and 46 may optionally be fitted with a filter media such as a stainless steel mesh filter (not shown). The deflector is assembled with the tube 32 engaging bottom piece central opening 47 and top piece collar 43. The upper edge of bottom piece 44 is joined to the outer periphery of the upper piece flange portion 42 by means known in the art, such as crimping, welding, gluing, and the like.

## Claims

1. A liquid reductant dosing module for a combustion exhaust treatment system comprising:
an enclosed reservoir (33) comprising a top, a bottom, one or more sides, an inlet (25), and an outlet (27); **characterized in that** the system further comprises
a resistive wire rod heater disposed in said reservoir, comprising:
a hollow member (32) extending along a first axis between the bottom of said reservoir and the top of said reservoir;
a resistive metal wire (39) disposed along said member such that when electric current is applied to said resistive metal wire (39), a greater portion of electric power is distributed as heat proximate to the bottom of said reservoir than is distributed as heat proximate to the top of said reservoir.

2. A liquid reductant dosing module according to claim 1 wherein there is a greater density of resistive metal wire (39) disposed along said member proximate to the bottom of said reservoir than is disposed along said member proximate to the top of said reservoir.

3. A liquid reductant dosing module according to claim 1 wherein resistive metal wire (39) disposed along said member proximate to the bottom of said reservoir has a greater resistivity than resistive metal wire (39) disposed along said member proximate to the top of said reservoir.

4. A liquid reductant dosing module as set in any of the preceding claim wherein resistive metal wire (39) is disposed along said member such that when current is applied to said resistive metal wire (39), 0 to 10 percent of the heat generated by such current is distributed along a zone (34) of said member proximate to the top of said reservoir, 60 to 80 percent of the heat generated by such current is distributed along a zone (36) of said member proximate to the bottom of said reservoir, and 20 to 30 percent of the heat generated by such current is distributed along a zone (35) of said member between the zone proximate to the top and the zone proximate to the bottom of said reservoir.

5. A liquid reductant dosing module as set in any of the claim 1 to 3 wherein resistive metal wire (39) is disposed along said hollow member such that when current is applied to said resistive metal wire (39), 0 to 1 watts/in² is distributed along a zone (34) of said hollow member proximate to the top of said reservoir, 8 to 10 watts/in² is distributed along a zone (36) of said hollow member proximate to the bottom of said reservoir, and 2.5 to 3.5 watts/in² is distributed along a zone (35) of said member between the zone proximate to the top and the zone proximate to the bottom of said reservoir.

6. A liquid reductant dosing module as set in any of the preceding claim wherein said inlet is located proximate to the bottom of said reservoir.

7. A liquid reductant dosing module as set in any of the preceding claim wherein said outlet (27) comprises a pickup tube (31) extending along a second axis, which may be the same as or different than said first axis, extending between the bottom of said reservoir and the top of said reservoir, said pickup tube (31) having an open end proximate to the bottom of said reservoir.

8. A liquid reductant dosing module according to claim 7 wherein said pickup tube (31) is disposed inside said hollow member.

9. A liquid reductant dosing module according to claim 4 wherein the resistivity of the resistive metal wire (39) along a zone (34) of said member proximate to the top of said reservoir is 0 ohm-m to 0.25 ohm-m, the resistivity of the resistive metal wire (39) along a zone (36) of said member proximate to the bottom of said reservoir is 1.5 ohm-m to 2.5 ohm-m, and the resistivity of the resistive metal wire (39) along a zone (35) of said member between the zone proximate to the top and the zone proximate to the bottom of said reservoir is 0.25 ohm-m to 0.5 ohm-m.

10. A liquid reductant dosing module according to any of the claim 1 or 2 wherein said wire material has a resistivity of 1 ohm-m to 1.5 ohm-m.

11. A liquid reductant dosing module as set in any of the preceding claim wherein said wire material has a positive temperature resistivity coefficient ranging from 0.1 ohm-m/°C to 0.15 ohm-m/°C.

12. A liquid reductant dosing module as set in any of the preceding claim, further comprising a Wheatstone bridge control circuit to control the current applied to said resistive wire.

13. A liquid reductant dosing module as set in any of the preceding claim, further comprising a heat sink member (37, 38) in thermal contact with said heater in said zone proximate to the bottom of said reservoir.

14. A liquid reductant dosing module according to claim 5, further comprising a heat sink member (37, 38) in thermal contact with said heater in said zone (36) proximate to the bottom of said reservoir such that when current is applied to said resistive metal wire (39), 0.5 to 1.5 watts/in2 is distributed through the combined surface area of said heat sink member (37, 38) and said hollow member (32) along the zone (36) of said hollow member proximate to the bottom of said reservoir.

15. A liquid reductant dosing module as set in any of the preceding claim, further comprising a deflector to inhibit convectional movement of liquid reductant from proximate the bottom of said reservoir toward the top of said reservoir.
